# EUROPÄISCHE PATENTSCHRIFT

(11) **EP 1 961 131 B1**
(45) Veröffentlichungstag und Bekanntmachung des Hinweises auf die Patenterteilung: **08.02.2017**
(21) Anmeldenummer: 06828537.8
(22) Anmeldetag: 15.11.2006
(51) Int. Cl.: H04B 7/02

(54) **VERFAHREN ZUR ÜBERTRAGUNG VON FUNKSIGNALEN**
METHOD FOR TRANSMITTING RADIO SIGNALS
PROCEDE DE TRANSMISSION DE SIGNAUX RADIO

(30) Priorität: 06.12.2005 DE 102005059196
(43) Veröffentlichungstag der Anmeldung: 27.08.2008
(73) Patentinhaber: Vodafone Holding GmbH, 40213 Düsseldorf (DE)
(72) Erfinder: FETTWEIS, Gerhard, 01326 Dresden (DE)
(74) Vertreter: KNH Patentanwälte
(86) Internationale Anmeldenummer: PCT/DE2006/002033
(87) Internationale Veröffentlichungsnummer: WO 2007/065395

(56) Entgegenhaltungen:
- EP-A- 1 248 387
- EP-A- 1 469 686
- WO-A1-01/20818
- US-B1- 6 208 871
- KURJENNIEMI J ET AL: "Closed loop mode 1 transmit diversity with high speed downlink packet access" COMMUNICATION TECHNOLOGY PROCEEDINGS, 2003. ICCT 2003. INTERNATIONAL CONFERENCE ON APRIL 9 - 11, 2003, PISCATAWAY, NJ, USA,IEEE, Bd. 2, 9. April 2003 (2003-04-09), Seiten 757-761, XP010643966 ISBN: 7-5635-0686-1

## Beschreibung

### Technisches Gebiet

Die Erfindung betrifft ein Verfahren, ein Endgerät sowie Sendeeinrichtungen zum Übertragen von Funksignalen.

### Stand der Technik

Es existiert derzeit eine Vielzahl von verschiedenen Systemen zur Übertragung von Informationen über elektromagnetische Funkwellen. Solche Systeme arbeiten in Frequenzbereichen von der Mittelwelle im Radio bis zu den extrem hohen Frequenzen im Mobilfunkbereich. Ein grundsätzliches Problem bei der Nutzung von Funkwellen ist die gesicherte Übertragung von Signalen von einem Sender zu einem Empfänger. Aus der Satellitentechnik ist die wiederholte Übertragung ein und desselben Signals sowie die anschließende Überlagerung der zeitlich versetzt empfangenen Signale bekannt. Durch die mehrfache, in einigen Fällen mehr als tausendmalige, Übertragung, wird sichergestellt, dass stochastische Störsignale herausgefiltert werden können. Ein Nachteil dieses Verfahrens ist, dass durch die Mehrfachübertragung die verwendete Bandbreite nicht optimal genutzt wird.

Eine andere Lösung bietet nach Alamouti die Zerlegung von Informationen in einzelne Einheiten, wobei eine erste Sendestation eine erste Informationseinheit gefolgt von einer zweiten Informationseinheit überträgt und parallel eine zweite Sendestation eine modifizierte Version der zweiten Informationseinheit gefolgt von einer modifizierten Version der ersten Informationseinheit überträgt. Der Vorteil ist, dass eine Störung des Übertragungskanals von einer der beiden Sendestationen zur Empfangsstation durch den alternativen Übertragungskanal von der anderen Sendestation zur Empfangsstation kompensiert werden kann, da in jedem Fall beide Informationseinheiten über beide Kanäle übertragen werden.

Eine weitere Leistungssteigerung gegenüber dem Alamouti Verfahren kann durch eine kohärente, also phasenrichtige Überlagerung der von den zwei Sendestationen abgesendeten Signale am Empfänger erreicht werden.

Es ist daher Aufgabe der Erfindung, ein System zur Verfügung zu stellen, das diese kohärente Überlagerung der Signale von zwei oder mehr Sendestationen an einer Empfangsstation ermöglicht.

EP 1 469 686 offenbart ein Feedback- Steuerungsverfahren in einem Übertragungsdiversitätssystem.

### Zusammenfassung der Erfindung

Die Erfindung stellt ein Verfahren gemäß Anspruch 1, ein Empfangsgerät gemäß Anspruch 4 und ein Mobilsystem gemäß Anspruch 6.

### Kurzbeschreibung der Figuren

Figur 1 zeigt schematisch den Aufbau eines Sende-/Empfangssystem entsprechend der Erfindung.
Figur 2 stellt den Ablauf eines erfindungsgemäßen Verfahrens dar.
Figur 3 stellt ein Ablaufdiagramm eines weiteren erfindungsgemäßen Verfahrens dar.
Figur 4 stellt ein Ablaufdiagramm eines dritten erfindungsgemäßen Verfahrens dar.
Figur 5 stellt ein Schema eines erfindungsgemäßen Empfangsgerätes dar.
Figur 6 stellt ein Schema einer erfindungsgemäßen Sendeeinrichtung dar.

### Detaillierte Beschreibung der Erfindung

Die Erfindung betrifft ein Verfahren zur Übertragung von Funksignalen von einer Sendeeinrichtung zu einem Empfangsgerät. Derartige Sendeeinrichtungen können sich verschiedenster Übertragungstechnologien, beispielsweise analoger oder digitaler Übertragungstechnologien, bedienen. Die Erfindung kann in allen Frequenzbereichen, von extrem hochfrequenten optischen Übertragungssystemen bis hin zu äußerst langweiligen Übertragungssystemen verwendet werden. Die Erfindung kann sowohl bei unidirektionalen Systemen wie Rufsystemen, Radio, Fernsehen oder anderen Rundfunksystemen verwendet werden, als auch bei bidirektionalen Systemen wie beispielsweise Mobilfunksystem.

Bei dem Mobilfunksystem ist die Erfindung auch nicht auf Systeme die nach dem GSM-Standard, GPRS, EDGE, CDMA2000, cdmaONE, WCDMA oder dem UMTS-Standard arbeiten, beschränkt. Weitere beispielhaft aufgeführte Standards, nach denen das System arbeiten kann, sind die amerikanischen Standards Advanced Mobile Phone System AMPS und Digital Advanced Mobile Phone System D-AMPS. Außerdem kann es für Systeme, die nach den asiatischen PDC-Standards arbeiten, eingesetzt werden. Es ist auch für Kurzentfernungsübertragungssysteme, wie Bluetooth oder andere so genannte Short Range Radio Systeme sowie OFDM und OFDMA Systeme verwendbar.

Im Folgenden wird die Erfindung, zum besseren Verständnis, anhand eines zellularen Telekommunikationssystems erläutert.

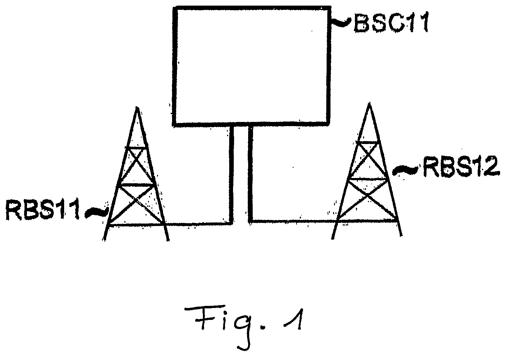

Figur 1 stellt ein erfindungsgemäßes System, umfassend eine erste Sendestation RBS 11, eine zweite Sendestation RBS 12, einen Netzknoten BSC 11 sowie ein Empfangsgerät UE 11 dar. Der Netzknoten BSC 11 ist nur optional und zu Zwecken des besseren Verständnisses dargestellt worden. Nicht dargestellt sind die Übertragungsstrecken zwischen der ersten Sendeeinrichtung RBS 11 und dem Endgerät UE 11 sowie der zweiten Sendeeinrichtung RBS 12 und dem Endgerät UE 11. Diese Strecken weisen unterschiedliche Signallaufzeiten und Phasendrehungen auf.

Ein Merkmal der Erfindung ist, dass beide Sendeeinrichtungen RBS 11, RBS 12, ein identisches Sendesignal senden, wobei das Signal, das über die Übertragungsstrecke mit der längeren Laufzeit übertragen wird, um genau den Betrag früher gesendet wird, der erforderlich ist, um eine synchrone Signalüberlagerung beim Empfangsgerät zu gewährleisten. Weiterhin wird die Phasenlage mindestens eines der beiden Sendesignale derart verändert, dass eine kohärente Überlagerung der beiden Signale an der Empfangseinrichtung resultiert. Unter kohärent im Sinne der Anmeldung ist eine vorteilhafte Überlagerung der Signale zu verstehen, die zu einer Verbesserung des Signal Rauschabstandes des überlagerten Signals gegenüber dem Signal Rauschabstand eines Einzelsignals führt.

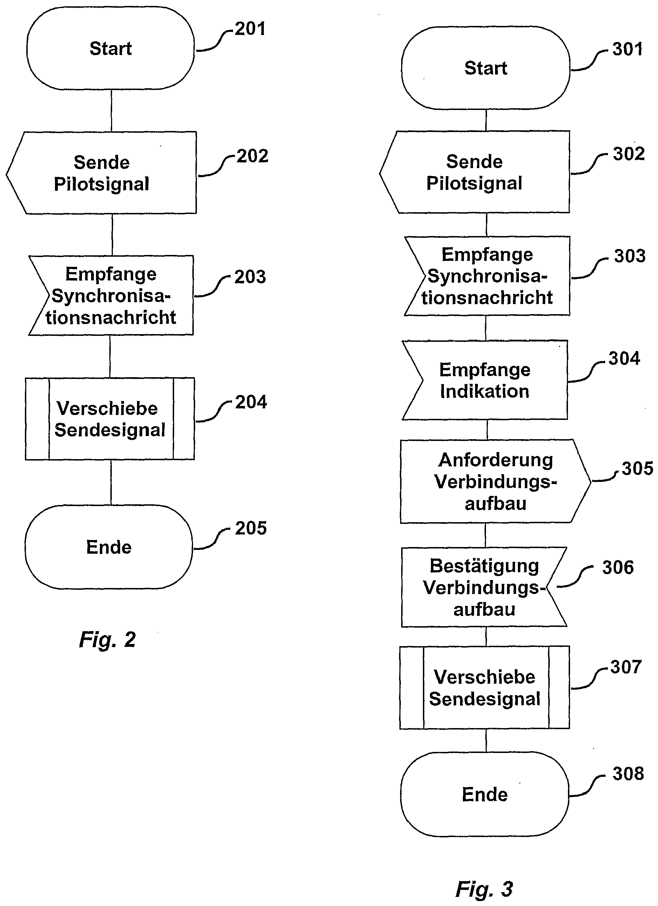

Figur 2 zeigt ein beispielhaftes Verfahren für eine Sendevorrichtung zur Umsetzung des erfinderischen Verfahrens. Das Verfahren beginnt in einem ersten Schritt 201. In einem weiteren Schritt 202 sendet die Sendeeinrichtung ein Pilotsignal, d.h. ein Signal das geeignet ist, zu Synchronisationszwecken sowie zur Kanalschätzung verwendet zu werden. Ein solches Pilotsignal kann auf dem zur Übertragung genutzten Kanal übertragen werden, es kann aber auch auf einem vollkommen anderen Kanal, beispielsweise einem so genannten Broadcast Channel übertragen werden, Ein Beispiel eines derartigen Broadcast Channels ist der BCCH-Kanal, der im GSM-System verwendet wird.

In einem weiteren Schritt 203 empfängt die Sendeeinrichtung eine Synchronisationsnachricht, die eine Information enthält, anhand derer die Sendeeinrichtung bestimmen kann, um wie viel das Sendesignal zeitlich verschoben werden muss, um eine synchrone Signalüberlagerung beim Endgerät zu ermöglichen. Eine solche Verschiebung kann sowohl eine Verzögerung als auch ein beschleunigtes Senden des Signals an das Endgerät bedeuten. Weiterhin empfängt die Sendeeinrichtung eine Phasenkorrekturnachricht, die eine Information enthält, anhand derer die Sendeeinrichtung bestimmen kann, um welchen Wert die Phase des Sendesignals korrigiert werden muss. In einem nachfolgenden Schritt 204 verschiebt die Sendeeinrichtung die Übertragung eines Nutzsignals um den entsprechenden Zeitbetrag und korrigiert die Phase des Sendesignals um die entsprechenden Phasenwert. Das Verfahren endet in einem Schritt 205.

Figur 3 stellt ein Flussdiagramm eines weiteren erfindungsgemäßen Verfahrens dar. Das Verfahren beginnt in einem ersten Schritt 301. In einem zweiten Schritt wird ein Pilotsignal 302 gesendet, das dem Pilotsignal des Schrittes 202 entspricht. In einem weiteren Schritt 303 wird eine Synchronisationsnachricht empfangen, die der für Figur 2 beschriebenen Schritt 203 entspricht. In einem weiteren Schritt 304 empfängt die Sendeeinrichtung eine Indikation, dass sie als weitere Sendeeinrichtung zur Übertragung eines Nutzsignals zu einem Empfangsgerät verwendet wird. Diese Indikation kann auch zusammen mit der Synchronisationsnachricht oder vor der Synchronisationsnachricht empfangen werden. In einer bevorzugten Ausführungsform enthält die Indikation eine Adresse, unter der Inhalte, die an das Empfangsgerät übertragen werden sollen, empfangen werden können. In einem Mobilfunksystems kann diese Adresse ein Übertragungskanal zur Übertragung von Nutzerdaten von einem Basisstationssteuerungssystem oder einer Mobilfunkvermittlungsstelle sein.

In einem weiteren Schritt 305 fordert die Sendeeinrichtung einen Verbindungsaufbau zu der Adresse, von der die zu übertragenden Nutzdaten empfangen werden sollen, an. In einem folgenden Schritt 306 wird der Verbindungsaufbau bestätigt. Die Anforderung des Verbindungsaufbaus sowie dessen Bestätigung können auch in umgekehrter Richtung erfolgen, d.h. die Stelle, die die Nutzdaten zur Übertragung an das Empfangsgerät zur Verfügung stellt, kann den Verbindungsaufbau beantragen und die Sendeeinrichtung kann den Verbindungsaufbau bestätigen. In einem weiteren Schritt 307 erfolgt die Verschiebung des Sendesignals, das die Nutzdaten zum Empfangsgerät übertragen soll. Das Verfahren endet in einem Schritt 308.

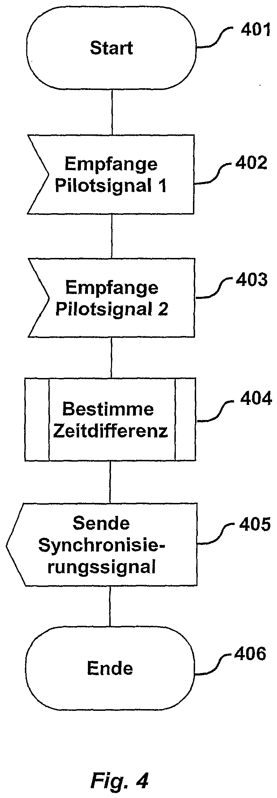

Figur 4 stellt ein Flussdiagramm eines dritten, erfindungsgemäßen Verfahrens dar. Das Verfahren startet in einem ersten Schritt 401. In einem weiteren Schritt 402 empfängt ein Empfangsgerät, in diesem Fall ein Endgerät eines zellularen Telekommunikationssystems, ein erstes Pilotsignal. In einem weiteren Schritt 403 empfängt das Endgerät ein zweites Pilotsignal. In einem weiteren Schritt 404 bestimmt das Endgerät die Zeit- und Phasendifferenz zwischen diesen beiden Signalen. Ein Bestimmen einer Zeitdifferenz kann durch Messen der Empfangszeiten einer bestimmten Zeichenkette von den Sendeeinrichtungen und anschließender Differenzbildung erfolgen, oder durch Bestimmung einer Kreuzkorrelation zwischen zwei empfangenen Signalen. Im Falle der Kreuzkorrelation wird nach der Verschiebung gesucht, die zu einer maximalen Übereinstimmung der von den Sendestationen empfangenen Signalen führt. Eine weitere Möglichkeit ist der Empfang eines hochpräzisen Zeitsignals, z.B. eines sehr präzisen Trägersignals. Die Phasendifferenz kann im Rahmen der Kanalschätzung anhand der Pilotsignale der beiden Sendeeinrichtungen ermittelt werden.

In einem folgenden Schritt 405 errechnet das Endgerät die erforderliche Zeitverschiebung und Phasendrehung und sendet ein entsprechendes Synchronisierungs- und Phasenkorrektursignal an mindestens eines der Sendeeinrichtungen. Das Verfahren endet in einem Schritt 406.

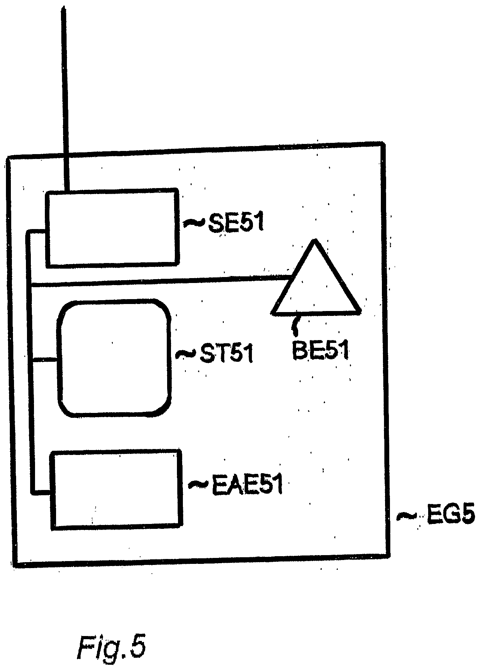

Figur 5 stellt ein Schema einer erfindungsgemäßen Empfangseinheit dar. Die Empfangseinheit EG 5 umfasst eine Sende-/Empfangseinheit SE 51 zum Senden und Empfangen von Funksignalen. Das Endgerät umfasst weiterhin eine Steuereinheit ST 51 zum Koordinieren der übrigen Einheiten. Des Weiteren umfasst das Endgerät eine Ein-/Ausgabeeinheit EA 51 zur Kommunikation mit einem Nutzer der Empfangsvorrichtung. Das Empfangsgerät umfasst weiterhin ein Berechnungsmodul BE 51, das dazu ausgestaltet ist, eine Zeit- und Phasendifferenz zwischen zwei von unterschiedlichen Sendevorrichtungen empfangenen Signalen zu bestimmen. Die Bestimmung kann wie vorstehend beschrieben erfolgen. Die Steuerungsvorrichtung ST51 ist so ausgestaltet, dass sie das Senden einer Synchronisations- sowie Phasenkorrekturnachricht an mindestens eine Sendevorrichtung veranlassen kann. Die Synchronisationsnachricht enthält dabei eine Information über die Verschiebung eines Sendesignals entsprechend der von dem Berechnungsmodul durchgeführten Bestimmung der Zeitdifferenz. Die Phasenkorrekturnachricht enthält eine Information über die Phasendrehung eines Sendesignals entsprechend der von dem Berechnungsmodul durchgeführten Bestimmung der Phasendifferenz. In einer bevorzugten Ausführungsform der Erfindung ist das Empfangsgerät als Endgerät eines zellularen Telekommunikationsnetzes ausgestaltet.

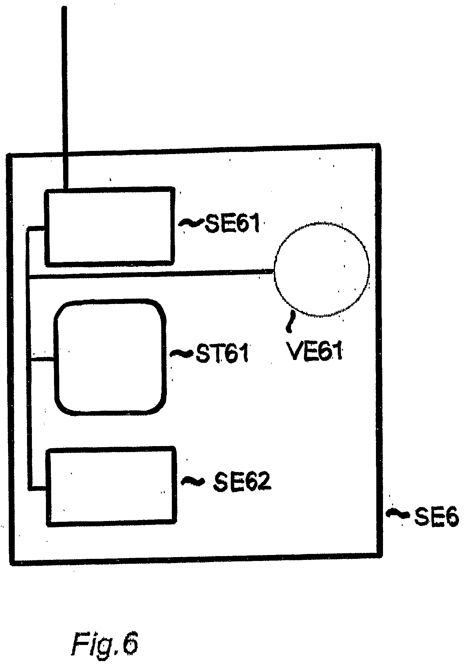

Figur 6 stellt ein Schema einer erfindungsgemäßen Sendeeinrichtung SE 6 dar. Die Sendeeinrichtung umfasst einen Sendeempfangsteil SE 61 zum Senden und Empfangen von Funksignalen, eine Steuerungsvorrichtung ST 61 zum Steuern der Komponenten der Sendevorrichtung sowie eine Verarbeitungseinheit VE 61 zum Verzögern sowie zur Korrektur der Phase eines Sendesignals. Die Verzögerung des Sendesignals entspricht dabei dem in einer Synchronisationsnachricht empfangenen Maß der erforderlichen Verschiebung eines Sendesignals. Die Verzögerung kann auch negativ sein, d.h. das Signal kann zeitlich eher gesendet werden. Die Phasenverschiebung des Sendesignals entspricht dabei dem in einer Phasenkorrekturnachricht empfangenen Maß der erforderlichen Phasendrehung. In einer Ausführungsform der Erfindung erfolgt die Phasendrehung jeweils um einen konstanten vordefinierten Wert je empfangenem Korrekturkommando, wobei dieses nur die Richtungsinformation der Phasendrehung enthält.

## Patentansprüche

1. Verfahren zur Übertragung von Sendesignalen an ein Empfangsgerät mit folgenden Schritten:
- Senden eines Pilotsignals von einer ersten Sendevorrichtung zu dem Empfangsgerät; und
- Senden eines Pilotsignals von einer zweiten Sendevorrichtung zu dem Empfangsgerät; und
- Empfangen des Pilotsignals von der ersten Sendevorrichtung und des Pilotsignals von der zweiten Sendevorrichtung in dem Empfangsgerät; und
- Bestimmen einer Laufzeit- und Phasendifferenz zwischen dem Pilotsignal von der ersten und dem Pilotsignal von der zweiten Sendevorrichtung in dem Empfangsgerät; und
- Senden einer Synchronisationsnachricht von dem Empfangsgerät an die zweite Sendevorrichtung, wobei die Synchronisationsnachricht die Angabe umfasst in welchem Maße das Sendesignal zeitlich verschoben und in der Phase korrigiert werden soll,
- Empfangen der Synchronisationsnachricht in der zweiten Sendevorrichtung, und
- Senden eines Sendesignals von der ersten Sendevorrichtung an das Empfangsgerät; und
- gleichzeitiges Senden eines zu dem Sendesignal der ersten Sendevorrichtung identischen Sendesignals von der zweiten Sendevorrichtung an das Empfangsgerät, wobei das Sendesignal um den in der Synchronisationsnachricht angegebenen Betrag zeitlich verschoben und in der Phase korrigiert ist, so dass die Sendesignale der ersten und zweiten Sendevorrichtung beim Empfangsgerät synchron und kohärent überlagert werden; und
- gleichzeitiges Empfangen des Sendesignals der ersten und der zweiten Sendevorrichtung in dem Empfangsgerät.

2. Verfahren nach Anspruch 1, bei dem die Sendevorrichtung eine Basisstation und die Empfangseinrichtung ein Endgerät eines zellularen Telekommunikationsnetzes ist.

3. Verfahren nach einem der vorhergehenden Schritte mit folgenden zusätzlichen Schritten:
- Empfangen einer Indikation, das die Sendevorrichtung als weitere Sendevorrichtung zur Versorgung des Empfangsgeräts dienen soll,
- Aufbauen einer Verbindung zu einem Netzknoten der an das Empfangsgerät zu sendenden Inhalte übennittelt.

4. Empfangsgerät umfassend
- einen Sende-Empfangsteil zum Senden und Empfangen von Funk- und Pilotsignalen,
- eine Steuerungsvorrichtung zum Steuern der Komponenten des Empfangsgeräts,
- eine Ein-/Ausgabeeinheit zur Kommunikation mit einem Nutzer der Empfangsvorrichtung,
wobei
ein Berechnungsmodul, das dazu ausgestaltet ist, eine Zeit- und Phasendifferenz zwischen zwei von unterschiedlichen Sendevorrichtungen empfangenen Pilotsignalen zu bestimmen, wobei ein gleichzeitig ausgesandtes Sendesignal einer zweiten Sendevorrichtung zu einem Sendesignal einer ersten Sendevorrichtung identisch ist, wobei die Steuerungsvorrichtung so ausgestaltet ist, dass sie das Senden einer Synchronisations- und Phasenkorrekturnachricht an mindestens eine der zwei unterschiedlichen Sendevorrichtungen veranlassen kann, und
dass der Sende-Empfangsteil dazu ausgestaltet ist, Funksignale von den zwei unterschiedlichen Sendevorrichtungen gleichzeitig zu empfangen, wobei das Funksignal der einen der zwei unterschiedlichen Sendevorrichtungen um die ermittelte Zeit- und Phasendifferenz verschoben ist, so dass die Funksignale der zwei unterschiedlichen Sendevorrichtungen beim Empfangsgerät synchron und kohärent überlagert sind.

5. Empfangsgerät nach Anspruch 4, das als Endgerät eines zellularen Telekolnmunikationsnetzes ausgestaltet ist.

6. Mobilfunksystem umfassend
- eine erste Sendevorrichtung umfassend einen Sende-Empfangsteil zum Senden von Pilot- und Sendesignalen an ein Empfangsgerät; und
- eine zweite Sendevorrichtung umfassend einen Sende-Empfangsteil zum Senden und Empfangen von Pilot- und Sendesignalen an das Empfangsgerät, eine Steuerungsvorrichtung zum Steuern der Komponenten der Sendevorrichtung, eine Verarbeitungseinheit zum Verzögern der Sendesignale sowie zur Korrektur der Phase der Sendesignale,
wobei die erste und zweite Sendevorrichtung eingerichtet sind zum
- Senden eines Pilotsignals von der ersten Sendevorrichtung zu dem Empfangsgerät,; und
- Senden eines Pilotsignals von der zweiten Sendevorrichtung zu dem Empfangsgerät; und
- Empfangen einer Synchronisationsnachricht von dem Empfangsgerät in der zweiten Sendevorrichtung, wobei die Synchronisationsnachricht die Angabe umfasst, in welchem Maße das Sendesignal zeitlich verschoben und in der Phase korrigiert werden soll,
wobei gleichzeitiges Senden eines Sendesignals von der ersten Sendevorrichtung und eines zu dem Sendesignal der ersten Sendevorrichtung identischen Sendesignals der zweiten Sendevorrichtung an das Empfangsgerät, wobei das Sendesignal von der zweiten Sendevorrichtung um den in der Synchronisationsnachricht angegebenen Betrag zeitlich verschoben und in der Phase korrigiert ist, um die Sendesignale der ersten und zweiten Sendevorrichtung beim Empfangsgerät synchron und kohärent zu überlagern.

7. Mobilfunksystem nach Anspruch 6, wobei die erste und die zweite Sendevorrichtung Basisstationen eines zellulwen Mobilfunksystems sind.

## Claims

1. Method for transmitting transmission signals to a receiving device, having the following steps of:
- transmitting a pilot signal from a first transmitting apparatus to the receiving device; and
- transmitting a pilot signal from a second transmitting apparatus to the receiving device; and
- receiving the pilot signal from the first transmitting apparatus and the pilot signal from the second transmitting apparatus in the receiving device; and
- determining a propagation time difference and a phase difference between the pilot signal from the first transmitting apparatus and the pilot signal from the second transmitting apparatus in the receiving device; and
- transmitting a synchronization message from the receiving device to the second transmitting apparatus, the synchronization message comprising the statement of the extent to which the transmission signal should be temporally shifted and corrected in terms of the phase,
- receiving the synchronization message in the second transmitting apparatus, and
- transmitting a transmission signal from the first transmitting apparatus to the receiving device; and
- simultaneously transmitting a transmission signal, which is identical to the transmission signal from the first transmitting apparatus, from the second transmitting apparatus to the receiving device, the transmission signal having been temporally shifted and corrected in terms of the phase by the amount stated in the synchronization message, with the result that the transmission signals from the first and second transmitting apparatuses are superimposed in a synchronous and coherent manner in the receiving device; and
- simultaneously receiving the transmission signal from the first and second transmitting apparatuses in the receiving device.

2. Method according to Claim 1, in which the transmitting apparatus is a base station and the receiving device is a terminal of a cellular telecommunications network.

3. Method according to one of the preceding claims, having the following additional steps of:
- receiving an indication that the transmitting apparatus is intended to be used as a further transmitting apparatus for supplying the receiving device,
- setting up a connection to a network node which transmits contents to be transmitted to the receiving device.

4. Receiving device comprising
- a transmitting/receiving part for transmitting and receiving radio and pilot signals,
- a control apparatus for controlling the components of the receiving device,
- an input/output unit for communicating with a user of the receiving apparatus,
**characterized by**
a calculation module which is configured to determine a time difference and a phase difference between two pilot signals received from different transmitting apparatuses, a simultaneously emitted transmission signal from a second transmitting apparatus being identical to a transmission signal from a first transmitting apparatus, the control apparatus being configured in such a manner that it can cause the transmission of a synchronization and phase correction message to at least one of the two different transmitting apparatuses, and that the transmitting/receiving part is configured to simultaneously receive radio signals from the two different transmitting apparatuses, the radio signal from one of the two different transmitting apparatuses having been shifted by the determined time difference and phase difference, with the result that the radio signals from the two different transmitting apparatuses are superimposed in a synchronous and coherent manner in the receiving device.

5. Receiving device according to Claim 4, which is in the form of a terminal of a cellular telecommunications network.

6. Mobile radio system comprising
- a first transmitting apparatus comprising a transmitting/receiving part for transmitting pilot and transmission signals to a receiving device; and
- a second transmitting apparatus comprising a transmitting/receiving part for transmitting and receiving pilot and transmission signals to/from the receiving device, a control apparatus for controlling the components of the transmitting apparatus, and a processing unit for delaying the transmission signals and for correcting the phase of the transmission signals,
the first and second transmitting apparatuses being set up to
- transmit a pilot signal from the first transmitting apparatus to the receiving device; and
- transmit a pilot signal from the second transmitting apparatus to the receiving device; and
- receive a synchronization message from the receiving device in the second transmitting apparatus, the synchronization message comprising the statement of the extent to which the transmission signal should be temporally shifted and corrected in terms of the phase,
**characterized by**
simultaneous transmission of a transmission signal from the first transmitting apparatus and a transmission signal, which is identical to the transmission signal from the first transmitting apparatus, from the second transmitting apparatus to the receiving device, the transmission signal from the second transmitting apparatus having been temporally shifted and corrected in terms of the phase by the amount stated in the synchronization message in order to superimpose the transmission signals from the first and second transmitting apparatuses in a synchronous and coherent manner in the receiving device.

7. Mobile radio system according to Claim 6, the first and second transmitting apparatuses being base stations of a cellular mobile radio system.

## Revendications

1. Procédé de transmission de signaux d'émission à un appareil de réception, comportant les étapes consistant à :
- émettre un signal pilote d'un premier dispositif d'émission vers l'appareil de réception ; et
- émettre un signal pilote d'un deuxième dispositif d'émission vers l'appareil de réception ; et
- recevoir le signal pilote en provenance du premier dispositif d'émission et le signal pilote en provenance du deuxième dispositif d'émission dans l'appareil de réception ; et
- déterminer une différence de temps de propagation et de phase entre le signal pilote provenant du premier dispositif d'émission et le signal pilote provenant du deuxième dispositif d'émission dans l'appareil de réception ; et
- émettre un message de synchronisation de l'appareil de réception vers le deuxième dispositif d'émission, dans lequel le message de synchronisation comprend une indication du degré de décalage temporel du signal d'émission et de la valeur dont la phase doit être corrigée,
- recevoir le message de synchronisation dans le deuxième dispositif d'émission, et
- émettre un signal d'émission du premier dispositif d'émission vers l'appareil de réception ; et
- émettre simultanément un signal d'émission identique au signal d'émission du premier dispositif d'émission du deuxième dispositif d'émission vers l'appareil de réception, dans lequel le signal d'émission est décalé temporellement de la valeur indiquée dans le message de synchronisation et est soumis à une correction de la phase de manière à ce que le signal d'émission des premier et deuxième dispositifs d'émission soient superposés de manière synchrone et cohérente dans l'appareil de réception ; et
- recevoir simultanément un signal d'émission des premier et deuxième dispositifs d'émission dans l'appareil de réception.

2. Procédé selon la revendication 1, dans lequel le dispositif d'émission est une station de base et le dispositif de réception est un terminal d'un réseau de télécommunication cellulaire.

3. Procédé selon l'une quelconque des revendications précédentes, comportant les étapes supplémentaires consistant à :
- recevoir une indication selon laquelle le dispositif d'émission doit être utilisé en tant qu'autre dispositif d'émission destiné à alimenter l'appareil de réception,
- établir une liaison avec un noeud de réseau qui transmet à l'appareil de réception des contenus à émettre.

4. Appareil de réception comprenant :
- une partie d'émission-réception destinée à émettre et recevoir des signaux radio et pilotes,
- un dispositif de commande destiné à commander les composants de l'appareil de réception,
- une unité d'entrée/sortie destinée à communiquer avec un utilisateur du dispositif de réception,
charactérizée en un module de calcul, qui est conçu pour déterminer une différence de temps et de phase entre deux signaux pilotes reçus par des dispositifs d'émission différents, dans lequel un signal d'émission émis simultanément par un deuxième dispositif d'émission est identique à un signal d'émission d'un premier dispositif d'émission, dans lequel le dispositif de commande est conçu de manière à ce qu'il puisse provoquer l'émission d'un message de synchronisation et de correction de phase vers au moins l'un des deux dispositifs d'émission différents, et
que la partie d'émission-réception est conçue pour recevoir simultanément des signaux radio en provenance des deux dispositifs d'émission différents, dans lequel le signal radio dudit un des deux dispositifs d'émission différents est décalé de la différence de temps et de phase déterminée de manière à ce que les signaux radio des deux dispositifs d'émission différents soient superposés de manière synchrone et cohérente dans l'appareil de réception.

5. Appareil de réception selon la revendication 4, conçu en tant que terminal d'un réseau de télécommunication cellulaire.

6. Système radio mobile comprenant
- un premier dispositif d'émission comprenant une partie d'émission-réception destinée à émettre des signaux pilotes et d'émission vers un appareil de réception ; et
- un deuxième dispositif d'émission comprenant une partie d'émission-réception destinée à émettre et recevoir des signaux pilotes et d'émission vers l'appareil de réception, un dispositif de commande destiné à commander les composants du dispositif d'émission, une unité de traitement destinée à retarder les signaux d'émission et à corriger les phases des signaux d'émission,
dans lequel les premier et deuxième dispositifs d'émission sont conçus pour
- émettre un signal pilote du premier dispositif d'émission vers l'appareil de réception ; et
- émettre un signal pilote du deuxième dispositif d'émission vers l'appareil de réception ; et
- recevoir un message de synchronisation en provenance de l'appareil de réception dans le deuxième dispositif d'émission, dans lequel le message de synchronisation comprend une indication du degré de décalage temporel du signal d'émission et de la valeur dont la phase doit être corrigée,
charactérizée en émettre simultanément un signal d'émission par le premier dispositif d'émission et un signal d'émission, du deuxième dispositif d'émission, qui est identique au signal d'émission du premier dispositif d'émission, vers l'appareil de réception, dans lequel le signal d'émission est décalé temporellement par le deuxième dispositif d'émission de la valeur indiquée dans le message de synchronisation et est soumis à une correction de phase afin de superposer de manière synchrone et cohérente les signaux d'émission des premier et deuxième dispositifs d'émission dans l'appareil de réception.

7. Système radio mobile selon la revendication 6, dans lequel les premier et deuxième dispositifs d'émission sont des stations de base d'un système radio mobile cellulaire.
